# EUROPÄISCHE PATENTSCHRIFT

(11) **EP 3 670 135 B1**
(45) Veröffentlichungstag und Bekanntmachung des Hinweises auf die Patenterteilung: **04.08.2021**
(21) Anmeldenummer: 18215014.4
(22) Anmeldetag: 21.12.2018
(51) Int. Cl.: B29C 45/14

(54) **KASCHIERTE FOLIE, DAMIT HERGESTELLTES KUNSTSTOFFBAUTEIL, SOWIE VERFAHREN UND WERKZEUG DAFÜR**
LAMINATED FOIL, PLASTIC COMPONENT WITH SUCH A FOIL, PROCESS AND DEVICE FOR ITS PRODUCTION
FILM DISSIMULÉ, COMPOSANT EN MATIÈRE PLASTIQUE AVEC UN TEL FILM ET PROCÉDÉ ET DISPOSITIF POUR SON FABRICATION

(43) Veröffentlichungstag der Anmeldung: 24.06.2020
(73) Patentinhaber: Dr. Schneider Kunststoffwerke GmbH, 96317 Kronach-Neuses (DE); SYMBIOSE SAS, 33500 Arveyres (FR)
(72) Erfinder: Weißmann, Roland, 96328 Küps (DE); Pawlak, Sebastian, 42660 Saint Genest Malifaux (FR)
(74) Vertreter: Pröll, Jürgen

(56) Entgegenhaltungen:
- EP-A1- 2 295 293
- EP-A2- 2 226 174
- DE-A1-102009 049 122
- DE-A1-102011 006 034
- DE-A1-102013 104 981
- US-A1- 2007 269 671
- US-A1- 2012 032 592
- US-A1- 2012 292 817

## Beschreibung

Die vorliegende Erfindung beschreibt ein Verfahren zur Herstellung eines Kunststoffbauteils mit einer kaschierten Folie als Dekorelement mit den Merkmalen des Patentanspruchs 1. Weiterhin wird eine Folie zur Verwendung des Verfahrens nach Patentanspruch 6 offenbart. Ein entsprechendes Werkzeug stellt Patentanspruch 12 unter Schutz und ein Kunststoffbauteil ist Gegenstand der Merkmale des Patentanspruchs 14.

Verfahren zur Hinterspritzung von Dekorelementen, wie Folien, sind bereits als sog. In-Mould-Verfahren bekannt, wobei man zwischen In-Mould-Decoration (IMD) und In-Mould-Labeling (IML) unterscheidet. Diese Verfahren werden u.a. bei Spritzgussverfahren angewandt und verarbeiten demzufolge ausschließlich thermoplastische Kunststoffe.

Bei der IMD wird eine Trägerfolie in die Spritzgussform eingebracht und mit Kunststoff hinterspritzt. Durch die Erwärmung der Folie wird die darauf befindliche Lack- oder Farbschicht abgelöst und verbleibt auf der Oberfläche des eingespritzten Kunststoffs. Damit ist bspw. das Aufbringen eines Motivs oder das Lackieren eines Kunststoffbauteils gleichzeitig mit dem Urformen möglich und erfordert keinen weiteren Arbeitsschritt. Die Trägerfolie muss nach jedem Arbeitsgang wieder erneuert werden. Dieses Verfahren findet überwiegend Anwendung in der Herstellung von Armaturen, Blenden u.Ä.

Beim IML wird wie beim IMD eine Folie in die Spritzgussform gebracht und mit Kunststoff hinterspritzt. Allerdings verbleibt bei diesem Verfahren die Kunststofffolie am Kunststoffbauteil und wird mit diesem thermisch verschweißt. Dieses Verfahren findet vor allem in der Verpackungsindustrie Anwendung.

Aus der DE 10 2012 109 820 A1 ist ein durch ein In-Mould-Verfahren hergestellter Körper sowie das Verfahren zu dessen Herstellung bekannt. Es wird hierbei eine Folie, auf der sich elektronische Komponenten befinden, in ein Spritzgusswerkzeug eingeführt und mit Kunststoff hinterspritzt. Die Kontaktierungsfläche, die auf der Folie ebenfalls angeordnet ist und dazu dient, zu einem späteren Zeitpunkt die elektrischen Bauteile, die sich ebenfalls auf der Folie befinden, zu kontaktieren, verbleibt ohne umgebenden Kunststoff und steht nach dem Hinterspritzen in Form eines Fähnchens ab.

Nachteilig hierbei ist, dass das Fähnchen aus demselben Folienmaterial wie die hinterspritze Folie besteht und vom fertigen Körper absteht, weshalb es daher leicht beschädigt werden kann oder abreißbar ist.

Aus der DE 10 2016 214 270 A1 ist eine Blende zur Innenausstattung eines Kraftfahrzeugs sowie ein Verfahren zur Herstellung dieser Blende bekannt. Die Blende umfasst dabei ein Folienelement mit einer Vorderseite und einer der Vorderseite gegenüberliegenden Rückseite und ein transparentes Kunststoffelement, welches auf der Vorderseite des Folienelements aufgebracht ist. Ferner ist das Folienelement transparent oder teiltransparent ausgebildet und auf der Vorderseite und der Rückseite bedruckt.

Nachteilig bei diesem Verfahren und der damit hergestellten Blende ist, dass die Folie entsprechend der verwendeten Spritzgussform die Blende plan abschließt. Außerdem wird die Folie nicht an der Blendenoberseite hinterspritzt, sondern befindet sich vom Betrachter aus gesehen unter der transparenten Kunststoffoberfläche.

Die DE 10 2017 208 098 A1 offenbart eine Spritzgussvorrichtung und Verfahren zum Herstellen eines Innenverkleidungsbauteils, wobei mehrere Werkzeugteile zur Anwendung kommen, um zwei Dekorabbildungselemente in zwei getrennten Schritten mit thermoplastischem Kunststoff zu hinterspritzen.

Nachteilig hierbei ist die Verwendung mehrerer Dekorabbildungselemente, die einen zusätzlichen Arbeitsschritt während des Spritzgussvorgangs erfordern, was dieses Verfahren aufwändig und macht.

Die DE 10 2016 200 342 A1 hat ein Herstellungsverfahren eines durchleuchtbaren Dekorelements zum Gegenstand. Hierbei wird ein flächiges Bauteil mit einem Dekorelement zu einen Verbundbauteil gefügt, wobei die einzelnen Bestandteile lichttransmittierende Eigenschaften aufweisen und das gesamte Verbundbauteil durchleuchtbar ist.

Nachteilig bei diesem Herstellungsverfahren ist die Tatsache, dass eine Trägerschicht für den Verbund aus flächigem Bauteil und Dekorelement erforderlich ist, die während des Fügens zusätzlich eingebracht werden muss. Außerdem weist das flächige Bauteil zumindest abschnittsweise eine Vielzahl von blendenartigen Strukturen auf, um den Lichtfluss aus der Sichtoberfläche heraus zu definieren.

Die DE 10 2015 214 247 A1 offenbart ein durchleuchtbares Dekorelement und ein Verfahren zu dessen Herstellung. Hierbei wird zunächst ein Trägerteil mit lichttransmissiven Eigenschaften hergestellt und mit einer lichtundurchlässigen eingefärbten Schicht versehen. Anschließend wird auf Trägerteil und Schicht eine weitere Schicht aufgetragen, wobei dieser Mittel mit optischen Diffusionseigenschaften und/oder farbgebenden Eigenschaften zugegeben werden.

Nachteilig bei diesem Verfahren ist, dass zusätzlich farbgebende Mittel bzw. Mittel mit optischen Diffusionseigenschaften hinzugefügt werden müssen, um den gewünschten optischen Effekt zu erzielen. Dies erfordert allerdings entsprechende Möglichkeiten an der Herstellungsvorrichtung und bedeutet zusätzlichen zeitlichen sowie materiellen Aufwand.

In der EP 3 162 534 A1 wird Verfahren zur Herstellung einer Kunststoffoberfläche mit integrierter Dekoration beschrieben. Die Dekoration wird auf ein Substrat digital gedruckt und anschließend in eine Kavität eines Gusswerkzeugs eingelegt. Dort wird eine Elastomerfolie gebildet, die das Substrat mit der Dekoration einschließt.

Nachteilig bei diesem Verfahren ist die Tatsache, dass die Folie nur einseitig bedruckt wird. Besondere optische Effekte, die durch eine Überlappung von Druckbereich infolge einer beidseitigen Bedruckung hervorgerufen werden, sind mit diesem Verfahren ausgeschlossen.

Die DE 10 2013 104 981 A1 beschreibt ein Verfahren zum Einbringen mindesten eines Zeichens oder Symbols in eine auf eine Folie aufgebrachte Schicht. Weiterhin wird ein Bearbeitungssystem zum Einbringen mindestens eines Zeichens oder Symbols in eine auf eine Folie aufgebrachte Schicht beschrieben. Hierbei ist die Folie vorgeformt und wird innerhalb einer Kavität in einer Spritzgussform mit besagten Zeichen oder Symbol versehen.

Die US 2012 / 292 817 A1 hat ein Dekorationsverfahren zum Gegenstand, welches In-mold Decoration (IMD) mit In-mold Labeling (IML) miteinander kombiniert. Hierbei werden die beiden Technologien derart miteinander kombiniert, dass die Herstellung in nur einem Werkzeug erfolgt. Außerdem wird ein Werkzeug zur Umsetzung des Verfahrens beschrieben.

Die EP 2 295 293 A1 offenbart ein Verfahren zum Herstellen eines Bauteil mit einem flächigen Dekorelement und ein Bauteil mit einem flächigen Dekorelement. Vor dem Hinterspritzen des flächigen Dekorelements wird dieses mit Durchbrüchen versehen. Eine Folie wird zwischen Dekorelement und einzuspritzendem Kunststoff verbracht, so dass während des Hinterspritzens die Folie in die Durchbrüche gedrückt wird.

Die US 2007 / 269 671 A1 beschreibt einen dekorierten Spritzgussartikel sowie ein Verfahren zur Herstellung desselben und eine Transferfolie zur Verwendung in diesem Verfahren. Der dekorierte Spritzgussartikel besteht hierbei aus einem Kunststoffmaterial und einem mechanisch fest verbundenen Dekorelement, welches durch eine Übertragungslage einer Transferfolie gebildet ist und ein Dekor für den Spritzgussartikel bereitstellt. Das Verfahren beschreibt außerdem die Herstellung desselben. Die Transferfolie besteht aus wenigstens einer Trägerfolie mit mehreren darauf und darunter angeordneten, funktionalen Schichten.

Die DE 10 2011 006 034 A1 hat ein Verfahren zur Herstellung eines Verbundbauteils zum Gegenstand, wobei das Verbundbauteil mithilfe eines Spritzgießwerkzeugs hergestellt wird. Hierbei wird ein Formteil mit Kunststoff durch eine Injektionseinrichtung hinterspritzt.

In DE 10 2009 049122 A1 wird eine kratzfeste Polypropylenfolie beschrieben, wobei eine transparente Polypropylenfolie mit einer Kratzfestbeschichtung versehen wird, die unter Einfluss von Hitze und Druck verformt werden kann. Die Folie enthält ein Copolymer aus Propylen und Ethylen. Die Kratzfestbeschichtung enthält ein aliphatisches Polyurethan und ein aliphatisches Isocyanat. Insbesondere eignet sich diese Folie zum Hinterdrucken, Tiefziehen, Prägen, Hinterspritzen, Hinterschäumen und Kaschieren. Die kratzfeste Polypropylenfolie ist z.B. für das In-Mold-Decoration-Verfahren (IMD) von Bauteilen geeignet.

Nachteilig ist hierbei, dass die Folie ihre Kratzfesteigenschaften verliert, sobald die mit einer weiteren Kunststoffschicht überspritzt wird bzw. ihre Kratzfesteigenschaften nicht mehr zum Tragen kommen können. Es können somit keine besonderen optischen 3D-Effekte mit dieser Folie erzeugt werden, die durch ein Überspritzen mit Kunststoff einen weiteren, besonderen Tiefeneffekt erhalten.

EP 2 226 174 A2 beschreibt ein Verfahren zur Herstellung eines Kunststoffteils mit einer von einer transparenten Kunststoffschicht bedeckten, durch die transparente Kunststoffschicht sichtbaren Farbschicht, mit den Schritten Aufbringen eines Schichtaufbaus auf eine Transferfolie, wobei der Schichtaufbau wenigstens eine Farbschicht aufweist und Anspritzen einer transparenten Kunststoffschicht an den Schichtaufbau, wobei die Transferfolie von dem erhaltenen Kunststoffteil ablösbar ist.

Nachteilig hierbei ist der Umstand, dass die Überspritze Folie wieder vom Kunststoff abgelöst wird. Sie fungiert lediglich als Träger für Farbe, die auf den Kunststoff während des Spritzgießens aufgebracht werden soll. Ein besonderer 3D-Effekt ist mit dieser Folie nicht möglich.

US 2012/032592 A1 hat ein Dekorelement für einen Kraftwagen sowie ein Verfahren zu dessen Herstellung zum Gegenstand. Das Dekorelement umfasst dabei eine zumindest teiltransparente Dekorfolie, welche auf ein flächiges Trägerelement aufgebracht und mit zwei Kunststoffschichten hinterspritzt ist. Zumindest die erste Kunststoffschicht ist dabei wenigstens teilweise transparent. Hierdurch wird eine Benutzung der ersten Kunststoffschicht als Lichtleiter möglich, was eine besonders optisch ansprechende Lichteinkopplung in das Dekorelement ermöglicht und besonders hohe gestalterische Spielräume eröffnet.

Nachteilig bei diesem Dekorelement ist, dass zwar gewisse optische Effekte erzeugbar sind, jedoch kein wirklich plastischer 3D-Effekt zustande kommt. Das beschriebene Dekorelement ist nicht in der Lage, einen besonderen dreidimensionalen Tiefeneffekt auszubilden.

Der Erfindung liegt nun die Aufgabe zugrunde, ein Verfahren bereitzustellen, mit dem ein Kunststoffbauteil hergestellt werden kann, das durch die Art und Weise der Aufbringung einer dekorativen Folie einen besonderen optischen Effekt erzielt. Weiterhin ist es Aufgabe eine Folie zur Verwendung in dem Verfahren, ein entsprechendes Werkzeug und ein verfahrensgemäß hergestelltes Kunststoffbauteil aufzuzeigen.

Diese Aufgaben werden durch die Merkmale der Patentansprüche 1, 6, 12 und 14 gelöst.

Vorteilhafte Ausgestaltungen der Erfindung ergeben sich anhand der weiteren Merkmale der abhängigen Patentansprüche, der Beschreibung sowie der Figuren, an welcher ein konkretes Ausführungsbeispiel beschrieben ist.

Die Ausführungen zum konkreten Ausführungsbeispiel limitieren jedoch die Erfindung nicht.

Das Verfahren zur Herstellung eines Kunststoffbauteils erfolgt unter Verwendung einer Folie, die auf der Folienoberseite oder auf der Folienunterseite mindestens einen Bereich mit Kaschierung und mindestens einen Bereich ohne Kaschierung aufweist, und einer Spritzgusswerkzeugform, bestehend aus mindestens zwei Werkzeugformteilen, mit den folgenden Schritten:
lit. a. Einbringen und Platzieren der Folie in die Spritzgusswerkzeugform,
lit. b. Fixierung der Folie in der Spritzgusswerkzeugform durch oder beim Schließen der beiden Werkzeugformteile,
lit. c. Einspritzen eines ersten Kunststoffs in das zweite Werkzeugformteil, wodurch
lit. d. die Folie durch den in eine Kavität des zweiten Werkzeugformteils eingespritzten ersten Kunststoff gegen das erste Werkzeugformteil gedrückt wird,
lit. e. Entnahme des Kunststoffbauteils aus der Spritzgusswerkzeugform.

In einer vorteilhaften Ausgestaltung des Verfahrens gemäß Patentanspruch 2 weist die Folie auf der Folienoberseite und auf der Folienunterseite Bereiche mit Kaschierung und Bereiche ohne Kaschierung auf, wobei der mindestens eine Bereich mit Kaschierung auf der Folienoberseite und der mindestens eine Bereich mit Kaschierung auf der Folienunterseite sich zumindest partiell überdecken, und der mindestens eine Bereich ohne Kaschierung auf der Folienoberseite und der mindestens eine Bereich ohne Kaschierung auf der Folienunterseite sich zumindest partiell nicht überdecken.

Weiterhin weist das erste Werkzeugformteil eine zu dem mindestens einen Bereich mit Kaschierung und zu dem mindestens einen Bereich ohne Kaschierung auf der Folienoberseite entgegengesetzt kongruente Positiv- oder Negativstruktur in Form von einer oder mehreren Erhebungen bzw. Vertiefungen auf.

Außerdem wird die Folie formschlüssig in die eine oder mehreren Vertiefungen oder um die eine oder mehreren Erhebungen des ersten Werkzeugformteils durch den Druck des in die Kavität des zweiten Werkzeugformteils eingespritzten Kunststoffs verbracht, sodass ein 3D-Effekt erzeugt wird.

Es wird durch Verwendung von wenigstens einer weiteren, unterschiedlich ausgeformten Kavität in der Spritzgusswerkzeugform zwischen dem Schritt lit. d. und lit. e. wenigstens eine Kunststoffschicht auf die Folienoberseite aufgespritzt.

In einer vorteilhaften Ausgestaltung des Verfahrens gemäß Patentanspruch 3 werden durch Verwendung von wenigstens drei unterschiedlich ausgeformten Kavitäten in der Spritzgusswerkzeugform zwischen dem Schritt lit. d. und lit. e. wenigstens zwei weitere Kunststoffschichten auf die Folienoberseite mit der Form der entsprechenden Kavität aufgespritzt.

In einer vorteilhaften Ausgestaltung des Verfahrens gemäß Patentanspruch 4 wird mit dem Aufspritzen durch die erste Kavität des ersten Werkzeugformteils wenigstens eine linsenförmige Ausformung auf der Folienoberseite ausgebildet.

In einer vorteilhaften Ausgestaltung des Verfahrens gemäß Patentanspruch 5 wird durch die Verwendung von transparenten Kunststoffen mit unterschiedlichen Brechungszahlen ein optischer Effekt durch Lichtbrechung an den Grenzflächen erzeugt.

In einer vorteilhaften Ausgestaltung der Folie gemäß Patentanspruch 6 weist die Folie auf der Folienoberseite und auf der Folienunterseite Bereiche mit Kaschierung und Bereiche ohne Kaschierung auf, wobei der mindestens eine Bereich mit Kaschierung auf der Folienoberseite und der mindestens eine Bereich mit Kaschierung auf der Folienunterseite sich zumindest partiell überdecken, und der mindestens eine Bereich ohne Kaschierung auf der Folienoberseite und der mindestens eine Bereich ohne Kaschierung auf der Folienunterseite sich zumindest partiell nicht überdecken.

In einer vorteilhaften Ausgestaltung der Folie gemäß Patentanspruch 7 ist die Folie transparent oder wenigstens transluzent ausgebildet.

In einer vorteilhaften Ausgestaltung der Folie gemäß Patentanspruch 8 besteht die Folie aus Polyvinylidenfluorid (PVDF) .

In einer vorteilhaften Ausgestaltung der Folie gemäß Patentanspruch 9 weist die Folie eine Dicke von wenigstens 10 µm auf.

In einer vorteilhaften Ausgestaltung der Folie gemäß Patentanspruch 10 ist die Folie mittels Physical Vapour Deposition (PVD) mit Metall beschichtet.

In einer vorteilhaften Ausgestaltung der Folie gemäß Patentanspruch 11 weist die Folie zusätzliche Pigmente auf.

Das Verfahren zur Herstellung eines Kunststoffbauteils verwendet neben einer Folie gemäß Patentanspruch 12 eine Spritzgusswerkzeugform, wobei die Spritzgusswerkzeugform mindestens zwei Werkzeugformteile aufweist.

In einer vorteilhaften Ausgestaltung der Spritzgusswerkzeugform gemäß Patentanspruch 13 ist neben der ersten Kavität des ersten Werkzeugformteils wenigstens eine weitere Kavität durch
lit. a. Öffnen und Schließen von Schiebern am ersten Werkzeugformteil oder
lit. b. Drehen einer Indexplatte, auf der das erste und wenigstens ein weiteres Werkzeugformteil mit unterschiedlichen Kavitäten angeordnet ist, oder
lit. c. Umlegen des Kunststoffbauteils vom ersten Werkzeugformteil in wenigstens ein weiteres Werkzeugformteil mit unterschiedlicher Kavität
für wenigstens einen weiteren eingespritzten Kunststoff freigebbar.

Mit dem genannten Verfahren wird gemäß Patentanspruch 14 ein Kunststoffbauteil hergestellt, das aus wenigstens zwei Kunststoffen und einer Folie nach Patentanspruch 6 bis 11 mit einer Folienoberseite und einer Folienunterseite besteht, wobei der erste Kunststoff eine Mischung aus Acrylnitril-Butadien-Styrol und Polyamid (ABS-PA), eine Mischung aus Polycarbonat und Acrylnitril-Butadien-Styrol (PC-ABS) oder reines Polycarbonat (PC) und der zweite Kunststoff Polyurethan (PUR), Polyurea, Polycarbonat (PC) oder Polymethylmethacrylat (PMMA) ist.

Weitere mögliche Ausgestaltungen der Erfindung werden nachfolgend fakultativ aufgeführt.

Die Erfindung betrifft ein Verfahren zur Herstellung eines Kunststoffbauteils, das mit einer Folie ausgestattet ist, die auf beiden Seiten kaschierte Bereiche aufweist, die sich teilweise überlappen. Dabei kann die Kaschierung lichtdurchlässig und lichtundurchlässig sein. Der durch das Verfahren hergestellte erfindungsgemäße Gegenstand kann bspw. Teil eines Interieurs eines Fahrzeugs sein oder als dekoratives Anzeigeelement mit besonderen optischen Effekten eingesetzt werden.

Die vorliegende Erfindung offenbart den Vorteil, dass im Gegensatz zum benannten Stand der Technik eine Folie mit Kaschierungen auf beiden Seiten eingesetzt wird. Durch Freiflächen und Überlappungen der Kaschierungen auf beiden Seiten der Folie können verschiedene optische Effekte erzielt werden. Besonders vorteilhaft treten diese optischen Effekte bei einer Hinterleuchtung in Erscheinung.

Das erfindungsgemäße Verfahren zur Herstellung eines Kunststoffbauteils erfolgt unter Verwendung einer Folie, die auf der Folienoberseite und auf der Folienunterseite mindestens einen Bereich mit Kaschierung und mindestens einen Bereich ohne Kaschierung aufweist, wobei der mindestens eine Bereich mit Kaschierung auf der Folienoberseite und der mindestens eine Bereich mit Kaschierung auf der Folienunterseite sich zumindest partiell überdecken, und wobei das der Folienoberseite zugewandte erste Werkzeugformteil im Bereich der Folienoberseite mit dem mindestens einen Bereich mit Kaschierung zumindest partiell plan abschließt und im Bereich des mindestens einen Bereichs ohne Kaschierung auf der Folienoberseite wenigstens eine Vertiefung aufweist, und einer Spritzgusswerkzeugform bestehend aus mindestens zwei Werkzeugformteilen, wobei das erste Werkzeugformteil eine zu dem mindestens einen Bereich mit Kaschierung und zu dem mindestens einen Bereich ohne Kaschierung auf der Folienoberseite entgegengesetzt kongruente Positiv- oder Negativstruktur in Form von einer oder mehreren Erhebungen bzw. Vertiefungen aufweist, mit den folgenden Schritten:
- lit a. Einbringen und Platzieren der Folie in die Spritzgusswerkzeugform,
- lit b. Fixierung der Folie in der Spritzgusswerkzeugform durch oder beim Schließen der beiden,
- lit c. Einspritzen eines Kunststoffs in das zweite Werkzeugformteil, wodurch,
- lit d. die Folie durch den eingespritzten Kunststoff in die eine oder mehreren Vertiefungen oder um die eine oder mehreren Erhebungen des ersten Werkzeugformteils verbracht wird, wodurch die Folienunterseite mit der mindestens einen Kaschierung in Richtung der Folienoberseite mit der mindestens einen Kaschierung verlagert wird, und schließlich
- lit e. Entnahme des Kunststoffbauteils aus der Spritzgussform.

Es wird durch die Dicke der Kaschierung und/oder die Vertiefungen oder Erhebungen des ersten Werkzeugformteils eine Verformung der Folie und damit eine Oberflächenstruktur auf dem Kunststoffteil erzeugt. So erhält man eine haptische und visuelle Oberflächenstruktur, wie sie bspw. bei geprägten Münzen, Medaillen o.Ä. zu finden ist. Dadurch kann Oberflächen, insbesondere bei metallischen oder metallisierten Oberflächen, ein besonders wertiger Charakter verliehen werden, was für eine Anwendung im Premiumsegment sehr vorteilhaft ist.

Als Werkzeugformteil ist ein formgebendes Element zu verstehen, welches Teil der Spritzgusswerkzeugform ist. Es ist in der Spritzgussmaschine austauschbar und bildet mit seinen Erhebungen und Vertiefungen Kavitäten aus, die die negative, dreidimensionale Form des zu fertigenden Bauteils, hier das Kunststoffbauteil, abbilden. In weiteren Ausführungsformen können Werkzeugformteile zusätzlich Schieber aufweisen, die zusätzliche Kavitäten oder Bereiche von Kavitäten während des Spritzgussvorgangs freigeben können. Auch können die Schieber sog. Kerne - also Bereiche, die nach dem Guss frei bleiben sollen - bereitstellen, die nach dem Spritzgießen aus dem Werkzeugformteil verbracht werden können. Dadurch ist es bspw. möglich, Bauteile mit Hinterschneidungen und/oder mit mehreren, unterschiedlichen Kunststoffen herzustellen, für die sonst mehrere Arbeitsschritte benötigt würden.

In einer vorteilhaften Ausgestaltung des Verfahrens wird die Folie formschlüssig in die eine oder mehreren Vertiefungen oder um die eine oder mehreren Erhebungen des ersten Werkzeugformteils durch den Druck des eingespritzten Kunststoffs verbracht, sodass ein 3D-Effekt erzeugt wird.

Der 3D-Effekt kommt durch die auf der Folie geschaffenen Erhebungen bzw. Vertiefungen zustande und wirkt besonders bei schräger Betrachtung oder schrägem Lichteinfall. Eine Kombination aus glänzender und matter Oberfläche verstärkt diesen Effekt zusätzlich. Auch wirken Kontraste in der Farbgebung verstärkend auf den 3D-Effekt.

Es wird durch Verwendung von wenigstens zwei unterschiedlich ausgeformten Kavitäten in dem ersten Werkzeugformteil, die durch Öffnen und Schließen von Schiebern geöffnet bzw. geschlossen werden können, zwischen dem Schritt lit. d. und lit. e eine weitere Kunststoffschicht auf die Folienoberseite aufgespritzt.

Umwelteinflüssen, wie bspw. Kratzern und Schmutz, geschützt und nachhaltig versiegelt.

In einer weiteren vorteilhaften Ausführung des Verfahrens werden durch Verwendung von wenigstens drei unterschiedlich ausgeformten Kavitäten in dem ersten Werkzeugformteil, die durch Öffnen und Schließen von Schiebern geöffnet bzw. geschlossen werden können, zwischen dem Schritt lit. d. und lit. e. zwei weitere Kunststoffschichten auf die Folienoberseite mit der Form der entsprechenden Kavität aufgespritzt.

Hierbei kann zusätzlich zur Oberflächenstruktur ein weiterer optischer Effekt erzeugt werden. Unter Verwendung von Kunststoffen mit unterschiedlichen Brechungszahlen wird das transmittierende Licht an den jeweiligen Grenzflächen mit unterschiedlicher Brechungszahl abgelenkt. Dadurch können je nach Form der Grenzflächen bspw. optische Lupen- und/oder Diamanteffekte erzeugt werden. Weiterhin können die Kunststoffe unterschiedlich eingefärbt werden, wodurch Farbkontraste erzeugbar sind. Auch sind Kunststoffe mit unterschiedlichen lichtdurchlässigen Eigenschaften, die von Beimengungen oder den Kunststoffen selbst herrühren, denkbar, sodass bspw. unterschiedliche Opazitäten im Erscheinungsbild des gesamten Kunststoffbauteils Anwendung finden.

Im genannten Stand der Technik werden keine Werkzeugformteile mit entgegengesetzt kongruenten Positiv- oder Negativstrukturen in Form von einer oder mehreren Erhebungen bzw. Vertiefungen zur Kaschierung auf der Folienoberseite offenbart, die infolge der Druckbeaufschlagung während des Spritzgießens eine Oberflächenstruktur auf dem Kunststoffbauteil schaffen.

In einer weiteren vorteilhaften Ausgestaltung des Verfahrens wird mit dem Aufspritzen durch die erste Kavität des ersten Werkzeugformteils wenigstens eine linsenförmige Ausformung auf der Folienoberseite ausgebildet.

Dadurch wird ein besonderer Lupeneffekt erzeugt, sofern Kunststoffe mit unterschiedlichen Brechungszahlen verwendet werden. Ferne ist auch denkbar, Kunststoffe mit unterschiedlichen Farben und/oder Opazitäten einzusetzen, sodass sich die wenigstens eine Linsenform optisch von ihrer Umgebung abhebt.

In einer weiteren vorteilhaften Ausführung des Verfahrens wird durch die Verwendung von transparenten Kunststoffen mit unterschiedlichen Brechungszahlen ein optischer Effekt durch Lichtbrechung an den Grenzflächen erzeugt.

Durch prismenförmige Grenzflächen kann das transmittierende Licht in seine farblichen Bestandteile gebrochen werden. Spiegelungen, hervorgerufen durch blanke metallische Oberflächen und/oder Totalreflexion, können ein weiterer optischer Effekt sein, wobei sich die Spiegelungen abhängig vom Betrachtungswinkel ändern. So können außerdem die optischen Eigenschaften eines Reflektors erzeugt werden.

Das Verfahren verwendet eine Folie, die auf der Folienoberseite und auf der Folienunterseite mindestens einen Bereich mit einer Kaschierung und mindesten einen Bereich ohne Kaschierung aufweist, wobei der mindestens eine Bereich mit der Kaschierung auf der Folienoberseite und der mindestens eine Bereich mit der Kaschierung auf der Folienunterseite sich zumindest partiell überdecken, und der mindestens eine Bereich ohne Kaschierung auf der Folienoberseite und der mindestens eine Bereich ohne Kaschierung auf der Folienunterseite sich zumindest partiell nicht überdecken.

Als Kaschierung kann z. B. Druckfarbe verwendet werden, die auf die Folie aufgedruckt wird. Die Bereiche mit und ohne Kaschierung ergeben im Gesamtbild durch verschiedene Kontrastierungen ein bestimmtes Motiv, wie bspw. ein Logo oder ein Schriftzug. Die Kaschierung kann neben unterschiedlichen Farben auch unterschiedliche Opazitäten aufweisen. Weiterhin können mit der Farbe auch Schiller- oder Glitzereffekte auf die Folie aufgebracht werden. Fluoreszierende und/oder phosphoreszierende Farben, die vor allem im Sicherheitsbereich Anwendung finden, sind als Kaschierung ebenfalls einsetzbar.

In einer weiteren vorteilhaften Ausgestaltung der Folie ist sie transparent oder wenigstens transluzent ausgebildet.

Dadurch kann mithilfe einer Leuchtquelle, die sich hinter der Folie befindet, diese hinterleuchtet werden, sodass gemeinsam mit vollständig opaken Bereichen auf, in und/oder unter der Folie beleuchtete und unbeleuchtete Bereiche auf der Folienoberseite für den Betrachter hervortreten. Dadurch können leuchtende Schriftzüge und/oder Symbole im Kunststoffbauteil realisiert werden.

In einer weiteren vorteilhaften Ausgestaltung besteht die Folie aus Polyvinylidenfluorid (PVDF).

PVDF ist ein Thermoplast mit guter chemischer Beständigkeit. Vorteilhaft bei der Verwendung von PVDF als Folie ist die Tatsache, dass sie bei Kontakt mit dem warmen, eingespritzten Kunststoff infolge ihrer thermoplastischen Eigenschaften erweicht und sich so der Kontur der Kavität des ersten Werkzeugformteils beim Einpressen anpasst, ohne dass sie zu schnell abreißt. Prinzipiell sind auch andere thermoplastische Werkstoffe, die sich als Folie mit ähnlichen Eigenschaften wie PVDF verarbeiten lassen, einsetzbar.

In einer weiteren vorteilhaften Ausgestaltung weist die Folie eine Dicke von wenigstens 10 µm auf.

Mit dieser Dicke weist die Folie ausreichend Stabilität auf, um während der Verarbeitung ausreichend reißfest zu sein. Außerdem weist die Folie wenigstens dieser Dicke transluzente Eigenschaften auf, sodass sie für Anwendungen mit Hinterleuchtung anwendbar ist.

In einer weiteren vorteilhaften Ausgestaltung ist die Folie mittels Physical Vapour Deposition (PVD) mit Metall beschichtet.

Infolge der Metallbeschichtung hat die Folie äußerlich die optischen Eigenschaften einer blanken Metalloberfläche. Dadurch können besondere optische Effekte mit der Folie erzielt werden, die ein metallisches Aussehen imitieren sollen. Neben optischen Effekten sind auch andere physikalische Effekte denkbar, die durch eine metallische Oberfläche herstellbar sind. So kann elektromagnetische Strahlung, auch außerhalb des sichtbaren Bereichs, durch die mit Metall beschichtete Folie bspw. reflektiert oder abgelenkt werden.

In einer weiteren vorteilhaften Ausgestaltung weist die Folie zusätzliche Pigmente auf.

Eine Pigmentierung der Folie schafft zusätzlich im Falle einer Hinterleuchtung besondere optische Effekte. So kann bspw. mittels Farbpigmenten eine bestimmte Farbe beim Durchleuchten erzeugt werden. Außerdem sind auch Muster oder verschiedene Schattierungen erzeugbar, die erst mithilfe einer Lichtquelle, bspw. einer ein- oder mehrfarbigen LED, die die Folie durchleuchtet, für einen Betrachter sichtbar werden.

Weiterhin wird für das genannte Verfahren eine Spritzgussform verwendet, die mindestens zwei Werkzeugformteile aufweist.

Allgemein wird darunter ein erstes und ein zweites Werkzeugformteil einer Spritzgussform von einer Spritzgussmaschine verstanden. Dabei weist jedes Werkzeugformteil wenigstens eine Kavität auf, die während des Spritzgießens mit bspw. Kunststoff aufgefüllt wird bzw. eine Folie vom Druck des eingespritzten Werkstoffs in die Kavität des Werkzeugformteils gepresst wird, sodass ggf. ein Formschluss entsteht.

In einer weiteren vorteilhaften Ausgestaltung weist das erste Werkzeugformteil wenigstens zwei Kavitäten auf, die durch Öffnen und Schließen von Schiebern für einen in das zweite Werkzeugformteil eingespritzten Kunststoff freigebbar sind.

So können verschiedene Kunststoffschichten in einem Arbeitsgang eingespritzt werden, ohne dass das erste Werkzeugformteil dafür extra gewechselt werden muss. Das spart einerseits Zeit im Fertigungsablauf und sichert andererseits eine hohe Maßhaltigkeit des fertigen Kunststoffbauteils, da keine Komponente neu ausgerichtet werden muss.

Statt eines ersten Werkzeugformteils kann in einer weiteren vorteilhaften Ausführung auch ein weiteres Werkzeugformteil verwendet werden, welches an die Stelle des ersten Werkzeugformteils tritt und eine Kavität mit anderer Ausformung bereitstellt.

Mit dem genannten Verfahren wird ein Kunststoffbauteil hergestellt, welches aus wenigstens einem ersten Kunststoff besteht.

Dabei muss kein reiner Kunststoff vorliegen, sondern kann auch eine Mischung aus verschiedenen Kunststoffen verwendet werden. Hierbei sind vor allem die gewünschten Eigenschaften, die mit dem Kunststoff bzw. der Kunststoffmischung erzielt werden sollen, ausschlaggebend. Vorzugsweise weist der erste Kunststoff transparente oder zumindest transluzente optische Eigenschaften auf.

In einer vorteilhaften Ausgestaltung ist der erste Kunststoff eine Mischung aus Acrylnitril-Butadien-Styrol und Polyamid (ABS-PA), eine Mischung aus Polycarbonat und Acrylnitril-Butadien-Styrol (PC-ABS) oder reines Polycarbonat (PC) und ein weiterer Kunststoff Polyurethan (PUR), Polyurea, Polycarbonat (PC) oder Polymethylmethacrylat (PMMA).

Aufgrund der Vielzahl an möglichen Kunststoffen sowie Kunststoffen, die aus einer Mischung aus mehreren Polymeren bestehen, ist eine abschließende Einschränkung auf bestimmte verwendbare Kunststoffe unmöglich, so dass auch über die genannten Kunststoffe hinaus weitere für das Kunststoffbauteil einsetzbar sind. Maßgebend für deren Auswahl sind hierbei vor allem ihre optischen sowie mechanischen Eigenschaften und die Verarbeitbarkeit in einer Spritzgussmaschine.

Vorteile und Zweckmäßigkeiten sind der nachfolgenden Beschreibung in Verbindung mit der jeweiligen Figur zu entnehmen.

Die nachfolgende Beschreibung der Erfindung anhand eines konkreten Ausführungsbeispiels stellt keine Limitierung der Erfindung auf dieses konkrete Ausführungsbeispiel dar.

Es zeigt:
- FIG 1: eine schematische Darstellung in seitlicher Schnittansicht einer Spritzgusswerkzeugform mit eingebrachter Folie;
- FIG 2: eine schematische Darstellung in seitlicher Schnittansicht einer Spritzgusswerkzeugform mit eingebrachter und mit Kunststoff hinterspritzter Folie;
- FIG 3: eine schematische Darstellung in seitlicher Schnittansicht einer Spritzgusswerkzeugform mit eingebrachter und mit Kunststoff hinterspritzter Folie sowie einem zweiten überspritzen Kunststoff oberhalb der Folie und
- FIG 4: eine schematische Darstellung in seitlicher Schnittansicht eines Kunststoffbauteils, welches mit der in FIG 1 bis FIG 3 beschriebenen Anordnung und Verfahrensschritte hergestellt wurde.

Sämtliche in den Anmeldeunterlagen offenbarten Merkmale werden als erfindungswesentlich beansprucht, sofern sie einzelnen und/oder in Kombination gegenüber dem Stand der Technik neu sind.

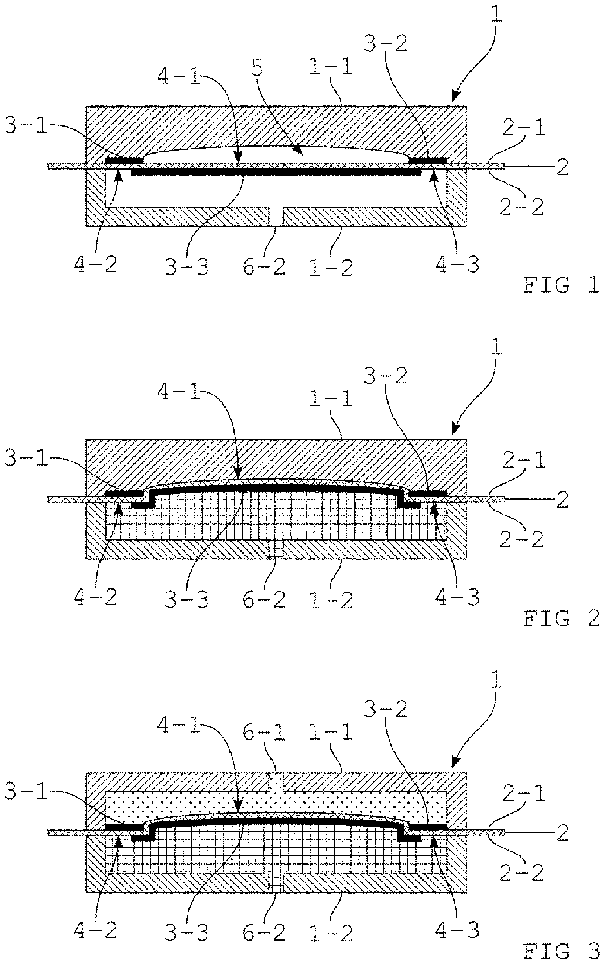

Es werden in der Figurenbeschreibung zu den Figuren FIG 1 bis FIG 3 für gleiche Elemente gleiche Bezugszeichen verwendet. Dies dient der besseren Verständlichkeit und Übersichtlichkeit der Figurenbeschreibung. Bezugszeichen sind in den jeweiligen Figuren nur dann verwendet, wenn sie für die Beschreibung der Erfindung im Zusammenhang mit den jeweiligen Figuren von Bedeutung sind.

In FIG 1 ist eine schematische Darstellung in seitlicher Schnittansicht einer Spritzgusswerkzeugform 1 mit eingebrachter Folie 2 dargestellt. Die Folie 2 wird an den Seiten der Spritzgusswerkzeugform 1 in ihrer Position gehalten, sodass sie während des gesamten Spritzgießvorgangs nicht verrutschen kann und an Ort und Stelle verbleibt.

In einer vorteilhaften Ausführung weist die Folie 2 eine Dicke von 175 µm auf. Ferner besteht die Folie aus Kunststoff, vorteilhaft aus Polyvinylidenfluorid (PVDF). Außerdem weist die Folie in einer weiteren vorteilhaften Ausführung eine metallisierte Oberfläche auf, die mittels Physical Vapour Deposition (PVD) bedampft ist.

Oberhalb sowie unterhalb befinden sich auf der Folie 2 Bereiche mit Kaschierungen 3-1, 3-2, 3-3, die transparent, transluzent oder auch opak sein können. Die Kaschierung kann bspw. als Druckfarbe ausgeführt sein und wird in einem vorbereitenden Schritt für das Spritzgießen entsprechend der gewünschten Kontur der kaschierten Bereiche 3-1, 3-2, 3-3 aufgedruckt. Zwischen den Kaschierungen befinden sich Bereiche ohne Kaschierung 4-1, 4-2, 4-3, die einen Kontrast zu den Bereichen mit Kaschierung 3-1, 3-2, 3-3 herstellen, wodurch gewünschte Konturen, Abbildungen, Beschriftungen o.Ä. darstellbar sind. Um sog. Blitzer zu vermeiden, sind die kaschierten Bereiche 3-1, 3-2 auf der Folienoberseite 2-1 und die kaschierten Bereiche 3-3 auf der Folienunterseite 2-2 überlappend angeordnet, sofern ein kaschierter Bereich 3-3 auf der Folienunterseite 2-2 angeordnet ist.

In einer vorteilhaften Ausgestaltung sind die Bereiche mit Kaschierung 3-1, 3-2 auf der Folienoberseite 2-1 opak, wie z.B. schwarz, und der kaschierte Bereich 3-3 auf der Folienunterseite 2-2 transluzent ausgeführt. Weiterhin weist der kaschierte Bereich 3-3 eine Färbung auf, sodass bei einer Hinterleuchtung der Bereich ohne Kaschierung 4-1 auf der Folie 2 oberhalb des eingefärbten, transluzenten Bereichs mit Kaschierung 3-3 zu einem farbigen Lichteffekt führt. So kann bspw. ein über die Bereiche mit Kaschierung 3-1, 3-2 auf der Folienoberseite 2-1 invers aufgedrucktes Logo gemeinsam mit dem Kaschierten Bereich 3-3 auf der Folienunterseite 2-2 bei Hinterleuchtung farblich hervorgehoben werden. Wird der kaschierte Bereich 3-3 auf der Folienunterseite 2-2 weggelassen, so tritt der entsprechende Bereich ohne Kaschierung 4-1 auf der Folienoberseite 2-1 bei einer Hinterleuchtung in der Farbe der verwendeten Leuchtquelle hervor.

Weiterhin weist das erste Werkzeugformteil 1-1 der Spritzgusswerkzeugform 1 eine Vertiefung 5 in entgegengesetzter kongruenter Form des darunter befindlichen Bereichs ohne Kaschierung 4-1 auf der Folienoberseite 2-1 auf. Statt einer sog. Negativstruktur kann auch eine für die Bereiche ohne Kaschierung 4-1 auf der Folienoberseite 2-1 Positivstruktur in Form von Erhebungen am Werkzeugformteil 1-1 vorherrschen. In diesem Fall befänden sich die Vertiefungen 5 bzw. Negativstruktur entgegengesetzt kongruent zu den Bereichen mit Kaschierung 3-1, 3-2 auf der Folienoberseite 2-1.

Unterhalb der Folie befindet sich ein weiteres Werkzeugformteil 1-2, was gemeinsam mit dem ersten Werkzeugformteil 1-1 die Spritzgusswerkzeugform 1 abschließt. Das weitere Werkzeugformteil 1-1 weist außerdem eine Kavität auf, die während des Spritzgießvorgangs über einen Anguss 6-2 mit Kunststoff gefüllt wird, sodass die Folie 2 hinterspritzt wird.

In einer alternativen Ausführungsform kann die Vertiefung 5 des ersten Werkzeugformteils 1-1 ebenfalls über einen Anguss mit Kunststoff gefüllt werden, sodass auf den Bereichen ohne Kaschierung 4-1 auf der Folienoberseite 2-1 eine weitere Kunststoffschicht aufgespritzt wird.

FIG 2 zeigt eine schematische Darstellung in seitlicher Schnittansicht einer Spritzgusswerkzeugform 1 mit eingebrachter und mit einem ersten Kunststoff hinterspritzte Folie 2. Der Aufbau folgt dem aus FIG 1 und stellt die beschrieben Spritzgusswerkzeugform 1 bestehend aus einem ersten Werkzeugformteil 1-1, einem weiteren Werkzeugformteil 1-2 und einer dazwischen eingebrachten Folie 2 nach einem Spritzgussvorgang dar, wobei die Folie 2 bspw. mit Kunststoff hinterspritzt wurde. Während des Spritzgussvorgangs wird dabei die Folie 2 durch den warmen Kunststoff erwärmt und in der Folge auch erweicht, sodass sie durch den ausgeübten Druck seitens des Kunststoffs gegen die Kontur, also die Erhebungen und Vertiefungen 5, des ersten Werkzeugformteils 1-1 gedrückt wird. Die Verbringung in das erste Werkzeugformteil 1-1 bildet für die Folie 2 eine Oberflächenstruktur aus. Diese Struktur erzeugt zusätzlich zu den Bereichen mit Kaschierung 3-1, 3-2 und ohne Kaschierung 4-1 auf der Folienoberseite 2-1 einen Tiefeneffekt, wie bspw. bei geprägten Münzen und Medaillen. Dadurch treten die Bereiche mit bzw. ohne Kaschierung 3-1, 3-2; 4-1 auf der Folienoberseite 2-1 deutlicher hervor. Außerdem wird durch den Prägecharakter der hinterspritzten Folie 2 ein sehr exklusives und wertiges Erscheinungsbild erzeugt. Unter Verwendung einer Folie 2 aus Metall oder aus Kunststoff, wie z.B. Polyvinylidenfluorid (PVDF), der durch Physical Vapour Deposition (PVD) metallisiert wurde, kann der Effekt einer geprägten Münze besonders gut nachgestellt werden.

In der gezeigten Abbildung tritt der Bereich ohne Kaschierung 4-1 auf der Folienoberseite 2-1 durch eine Erhebung infolge der entsprechenden Vertiefung 5 in dem ersten Werkzeugformteil 1-1 aus der Ebene der Folie 2 hervor. Die Oberflächenstrukturierung der Folie 2 infolge des genannten Spritzgussvorgangs ist dabei durch die Erhebung bzw. Vertiefung optisch sowie haptisch wahrnehmbar.

Für das Hinterspritzen eignet sich vor allem ein transparenter, mindestens aber ein transluzenter Kunststoff, wie bspw. eine Mischung aus Acrylnitril-Butadien-Styrol und Polyamid (ABS-PA), eine Mischung aus Polycarbonat und Acrylnitril-Butadien-Styrol (PC-ABS) oder Polycarbonat (PC). In dieser Ausführung kann die mit Kunststoff hinterspritzte Folie 2 hinterleuchtet werden. Sollte dieses Merkmal nicht relevant sein, so können auch opake Kunststoffe eingewählt werden.

FIG 3 zeigt eine schematische Darstellung in seitlicher Schnittansicht einer Spritzgusswerkzeugform 1 mit eingebrachter und mit einem ersten Kunststoff hinterspritzte Folie 2 sowie einem zweiten, überspritzten Kunststoff oberhalb der Folie 2. Die Folie 2 weist eine Erhebung auf, die durch den in FIG 2 beschriebenen Vorgang und mit der in FIG 1 dargelegten Anordnung von der Folie 2 mit den Bereichen mit und ohne Kaschierung 3-1, 3-2, 3-3; 4-1, 4-2, 4-3 auf der Folienober- sowie Folienunterseite 2-1, 2-2 und zwei Werkzeugformteilen 1-1, 1-2 der Spritzgusswerkzeugform 1 erzeugt wird. FIG 3 zeigt einen weiteren, möglichen

Verfahrensschritt, der nach dem Hinterspritzen aus FIG 2 folgen kann. Hierbei wird in einer vorteilhaften Ausführung durch Schieber eine weitere Kavität im ersten Werkzeugformteil 1-1 geöffnet. In diese Kavität wird im nächsten Schritt über ein Anguss 6-1 ein transparenter Kunststoff, wie bspw. Polyurethan (PUR), Polyurea, Polycarbonat (PC) oder Polymethylmethacrylat (PMMA), auf die Folie 2 aufgespritzt. Diese Kunststoffeinspritzung umschließt die Folie 2 mit Oberflächenstruktur in vorteilhafter Weise vollständig. Alternativ zur der mit Schiebern geöffneten, zweiten Kavität im ersten Werkzeugformteil 1-1 kann auch ein weiteres Werkzeugformteil mit entsprechender Kavität und Anguss zum Einsatz kommen, welches an die Stelle des ersten Werkzeugformteils 1-1 tritt.

Wird z.B. eine schwarze Kaschierung mit einem transparenten Kunststoff überspritzt, entsteht ein besonders hochwertiger Tiefeneffekt, so wie es bspw. auch bei schwarzem Klavierlack der Fall ist, der durch ein besonders tiefes Schwarz bei gleichzeitig hochglänzender Oberfläche gekennzeichnet ist. So ist es vorteilhaft, dass der zweite, aufgespritzte Kunststoff mit einer möglichst glatten Oberfläche versehen wird. Das kann zum einen durch eine sehr glatte und ebene Vertiefung der zweiten Kavität im ersten Werkzeugformteil 1-1 bzw. des weiteren Werkzeugformteils an der Stelle des ersten Werkzeugformteils 1-1 und/oder zum anderen durch ein nach dem Spritzvorgang anschließenden Poliervorgang der neugeschaffenen Oberfläche durch den zweiten Kunststoff geschehen.

In einer alternativen Ausgestaltung kann, wie bereits in FIG 1 beschrieben, die Vertiefung 5 des ersten Werkzeugformteils 1-1 mit Kunststoff gefüllt werden. Es kann ein besonderer optischer Effekt erzeugt werden, sofern der weitere, aufgespritzte Kunststoff, der mit der zweiten Kavität des ersten 1-1 oder eines weiteren Werkzeugformteils oberhalb der Folie 2 aufgespritzt wird, einen unterschiedlichen Brechungsindex aufweist. Bspw. hat PMMA ein Brechungsindex von 1,492 und PC 1,59. Kombiniert man diese zwei Kunststoffe durch abwechselndes überspritzen, so wird transmittierendes Licht an den jeweiligen Grenzflächen gebrochen. Durch prismenförmige Grenzflächen kann das transmittierende Licht in seine farblichen Bestandteile gebrochen werden. Spiegelungen, hervorgerufen durch blanke metallische Oberflächen und/oder Totalreflexion, können einen weiteren optischen Effekt erzeugen, wobei sich die Spiegelungen im Falle von Totalreflexion abhängig vom Betrachtungswinkel ändern. So können außerdem die optischen Eigenschaften eines Reflektors erzeugt werden. Ein Lupeneffekt ist mit der genannten Methode und entsprechend ausgeformter Grenzfläche auch erzeugbar.

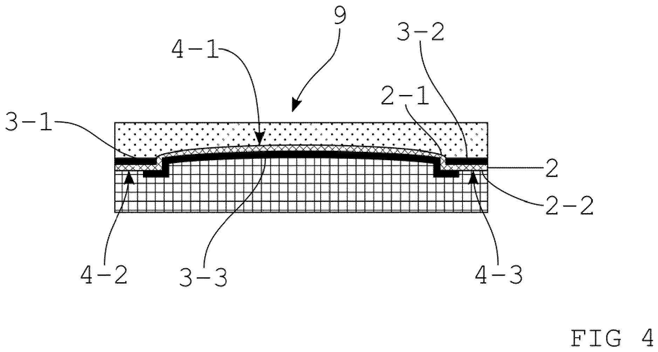

FIG 4 zeigt eine schematische Darstellung in seitlicher Schnittansicht eines Kunststoffbauteils 9, welches mit der in FIG 1 bis FIG 3 beschriebenen Anordnung und Verfahrensschritte hergestellt wurde. Die durch die Werkzeugformteile 1-1, 1-2 der Spritzgusswerkzeugform 1 entstandenen Angüsse sind nicht dargestellt, da sie in einer vorteilhaften Ausgestaltung rückstandslos entfernt worden sind. Mittig ist die Folie 2 mit Bereichen mit Kaschierung 3-1, 3-2 sowie ohne Kaschierung 4-1 auf der Folienoberseite 2-1 und entsprechend den Bereichen mit Kaschierung 3-3 und ohne Kaschierung 4-2, 4-3 auf der Folienunterseite 2-2 zu sehen. Dabei sind in einer vorteilhaften Ausgestaltung die Bereiche mit Kaschierung 3-1, 3-2 auf der Folienoberseite 2-1 opak ausgeführt. Der Bereich mit Kaschierung 3-3 auf der Folienunterseite 2-2 ist transparent oder zumindest transluzent und gefärbt ausgeführt, sodass bei einem Hinterleuchten des Kunststoffbauteils 9 der darüberliegende Bereich ohne Kaschierung 4-1 auf der Folienoberseite 2-1 sich farblich von seiner Umgebung abhebt.

Die Folie 2 ist auf der Folienunterseite 2-2 mit einem ersten Kunststoff hinterspritzt, der für den Einsatz mit Hinterleuchtung transparent oder zumindest transluzent ist. Mögliche Kunststoffe hierfür sind in der Beschreibung unter FIG 2 aufgeführt. Soll keine Hinterleuchtung erfolgen, können auch opake Kunststoffe zum Hinterspritzen der Folie 2 eingesetzt werden.

Auf der Folienoberseite 2-1 ist auf die Folie 2 ein zweiter Kunststoff gespritzt, der in jedem Fall transparent sein sollte. Mögliche Kunststoffe, die hierfür in Frage kommen, sind in der Beschreibung unter der FIG 3 genannt. Die Oberfläche des zweiten, aufgespritzten Kunststoffs ist glatt und in einer vorteilhaften Ausführung poliert ausgeführt. Die in der FIG 4 gezeigte Oberfläche muss nicht eben sein, sondern kann auch gewölbt ausgebildet sein, sodass ein Lupeneffekt für die darunter sichtbare Folie 2 und dem darauf befindlichen Motiv, gebildet aus abwechselnden Bereichen mit und ohne Kaschierung 3-1, 3-2; 4-1, erzeugt wird.

Das Kunststoffbauteil 9 kann in einer vorteilhaften Ausgestaltung als Dekorationselement eingesetzt werden. Unter solchen sind bspw. Verkleidungen für Mittelkonsolen und Armaturenbretter für die dekorative Innenausstattung von Transportmittel zu verstehen. Vor allem im Luxussegment sind Oberflächen mit besonderen optischen Effekten, wie Tiefenglanz, Oberflächenstruktur und besonders ansprechende Illuminierung, gefragt. Anzeigeelemente mit hinterleuchtbaren Symbolen sind ebenso denkbar. Weitere Ausgestaltungen in Form von Dekorationselementen können Embleme mit bspw. Herstellerlogos sein. Diese können als solches auf Oberflächen aufgebracht sein oder als Teil eines größeren Teils, bspw. eines Gehäuses von einem Bildschirm oder Fernseher, wo besonders im Premiumsegment die Hersteller das Logo ihrer Marke besonders effektvoll präsentieren wollen, integriert sein. Die genannten Einsatzmöglichkeiten sollen nicht als begrenzend zu verstehen sein, sondern vielmehr den Charakter und die damit verbundenen Verwendungsmöglichkeiten des mit dem erfindungsgemäßen Verfahren hergestellten Kunststoffbauteils 9 wiedergeben.

### Bezugszeichenliste

- 1: Spritzgusswerkzeugform
- 1-1: erstes Werkzeugformteil
- 1-2: zweites Werkzeugformteil
- 2: Folie
- 2-1: Folienoberseite
- 2-2: Folienunterseite
- 3-1: Bereich mit Kaschierung
- 3-2: Bereich mit Kaschierung
- 3-3: Bereich mit Kaschierung
- 4-1: Bereich ohne Kaschierung
- 4-2: Bereich ohne Kaschierung
- 4-3: Bereich ohne Kaschierung
- 5: Vertiefung
- 6-1: Anguss
- 6-2: Anguss
- 9: Kunststoffbauteil

## Patentansprüche

1. Verfahren zur Herstellung eines Kunststoffbauteils (9) unter Verwendung einer Folie (2),
die auf der Folienoberseite (2-1) mindestens einen Bereich mit Kaschierung (3-1, 3-2, 3-3) und mindestens einen Bereich ohne Kaschierung (4-1, 4-2, 4-3) aufweist,
und einer Spritzgusswerkzeugform (1), bestehend aus mindestens zwei Werkzeugformteilen (1-1, 1-2), wobei das erste Werkzeugformteil (1-1) eine zu dem mindestens einen Bereich mit Kaschierung (3-1, 3-2) und zu dem mindestens einen Bereich ohne Kaschierung (4-1) auf der
Folienoberseite (2-1) entgegengesetzt kongruente Positiv- oder Negativstruktur in Form von einer oder mehreren Erhebungen bzw. Vertiefungen (5) aufweist
mit den folgenden Schritten:
lit. a. Einbringen und Platzieren der Folie (2) in die Spritzgusswerkzeugform (1),
lit. b. Fixierung der Folie (2) in der Spritzgusswerkzeugform (1) durch oder beim Schließen der beiden Werkzeugformteile (1-1, 1-2),
lit. c. Einspritzen eines ersten Kunststoffs in das zweite Werkzeugformteil (1-2), wodurch
lit. d. die Folie (2) durch den in eine Kavität des zweiten Werkzeugformteils (1-2) eingespritzten ersten Kunststoff gegen das erste Werkzeugformteil (1-1) gedrückt wird und die Folie (2) formschlüssig in die eine oder mehreren Vertiefungen (5) oder um die eine oder mehreren Erhebungen des ersten Werkzeugformteils (1-1) durch den Druck des in die Kavität des zweiten Werkzeugformteils (1-2) eingespritzten Kunststoffs verbracht wird, sodass ein 3D-Effekt erzeugt wird,
lit. e. Aufspritzen wenigstens einer Kunststoffschicht auf die Folienoberseite (2-1) durch Verwendung von wenigstens einer weiteren, unterschiedlich ausgeformten Kavität in der Spritzgusswerkzeugform (1),
lit. f. Entnahme des Kunststoffbauteils (9) aus der Spritzgusswerkzeugform (1).

2. Verfahren nach Patentanspruch 1, **dadurch gekennzeichnet, dass** die Folie (2) auf der Folienoberseite (2-1) und auf der Folienunterseite (2-2) Bereiche mit Kaschierung (3-1, 3-2, 3-3) und Bereiche ohne Kaschierung (4-1, 4-2) aufweist, wobei der mindestens eine Bereich mit Kaschierung (3-1, 3-2) auf der Folienoberseite (2-1) und der mindestens eine Bereich mit Kaschierung (3-3) auf der Folienunterseite (2-2) sich zumindest partiell überdecken, und der mindestens eine Bereich ohne Kaschierung (4-1) auf der Folienoberseite (2-1) und der mindestens eine Bereich ohne Kaschierung (4-2, 4-3) auf der Folienunterseite (2-2) sich zumindest partiell nicht überdecken.

3. Verfahren nach Patentanspruch 1, **dadurch gekennzeichnet, dass** durch Verwendung von wenigstens drei unterschiedlich ausgeformten Kavitäten in der Spritzgusswerkzeugform (1) zwischen dem Schritt lit. d. und lit. f. wenigstens zwei weitere Kunststoffschichten auf die Folienoberseite (2-1) mit der Form der entsprechenden Kavität aufgespritzt werden.

4. Verfahren nach Patentanspruch 3, **dadurch gekennzeichnet, dass** mit dem Aufspritzen durch die erste Kavität des ersten Werkzeugformteils (1-1) wenigstens eine linsenförmige Ausformung auf der Folienoberseite (2-1) ausgebildet wird.

5. Verfahren nach Patentanspruch 3 oder 4, **dadurch gekennzeichnet, dass** durch die Verwendung von transparenten Kunststoffen mit unterschiedlichen Brechungszahlen ein optischer Effekt durch Lichtbrechung an den Grenzflächen erzeugt wird.

6. Folie (2) zur Verwendung in einem Verfahren nach den Patentansprüchen 1 bis 5, wobei die Folie (2) auf der Folienoberseite (2-1) und auf der Folienunterseite (2-2) Bereiche mit Kaschierung (3-1, 3-2, 3-3) und Bereiche ohne Kaschierung (4-1, 4-2) aufweist, wobei der mindestens eine Bereich mit Kaschierung (3-1, 3-2) auf der Folienoberseite (2-1) und der mindestens eine Bereich mit Kaschierung (3-3) auf der Folienunterseite (2-2) sich zumindest partiell überdecken, und der mindestens eine Bereich ohne Kaschierung (4-1) auf der Folienoberseite (2-1) und der mindestens eine Bereich ohne Kaschierung (4-2, 4-3) auf der Folienunterseite (2-2) sich zumindest partiell nicht überdecken.

7. Folie (2) nach Patentanspruch 6, **dadurch gekennzeichnet, dass** die Folie (2) transparent oder wenigstens transluzent ausgebildet ist.

8. Folie (2) nach Patentanspruch 6, **dadurch gekennzeichnet, dass** die Folie (2) aus Polyvinylidenfluorid (PVDF) besteht.

9. Folie (2) nach Patentanspruch 6, **dadurch gekennzeichnet, dass** die Folie (2) eine Dicke von wenigstens 10 µm aufweist.

10. Folie (2) nach Patentanspruch 6, **dadurch gekennzeichnet, dass** die Folie (2) mittels Physical Vapour Deposition (PVD) mit Metall beschichtet ist.

11. Folie (2) nach Patentanspruch 6, **dadurch gekennzeichnet, dass** die Folie (2) zusätzliche Pigmente aufweist.

12. Spritzgusswerkzeugform (1) zur Verwendung in einem Verfahren nach den Patentansprüchen 1 bis 5 und mit einer Folie (2) nach den Patentansprüchen 6 bis 11 zur Herstellung eines Kunststoffbauteils (9), wobei die Spritzgusswerkzeugform (1) mindestens zwei Werkzeugformteile (1-1, 1-2) aufweist, wobei das erste Werkzeugformteil (1-1) eine zu dem mindestens einen Bereich mit Kaschierung (3-1, 3-2) und zu dem mindestens einen Bereich ohne Kaschierung (4-1) auf der Folienoberseite (2-1) entgegengesetzt kongruente Positiv- oder Negativstruktur in Form von einer oder mehreren Erhebungen bzw. Vertiefungen (5) aufweist, in welche die Folie (2) formschlüssig in die eine oder mehreren Vertiefungen (5) oder um die eine oder mehreren Erhebungen des ersten Werkzeugformteils (1-1) durch den Druck des in die Kavität des zweiten Werkzeugformteils (1-2) eingespritzten Kunststoffs verbringbar ist, sodass ein 3D-Effekt erzeugbar ist.

13. Spritzgusswerkzeugform (1) nach Patentanspruch 12, **dadurch gekennzeichnet, dass** neben der ersten Kavität des ersten Werkzeugformteils (1-1) wenigstens eine weitere Kavität durch
lit. a. Öffnen und Schließen von Schiebern am ersten Werkzeugformteil (1-1) oder
lit. b. Drehen einer Indexplatte, auf der das erste (1-1) und wenigstens ein weiteres Werkzeugformteil mit unterschiedlichen Kavitäten angeordnet ist, oder
lit. c. Umlegen des Kunststoffbauteils (9) vom ersten Werkzeugformteil (1-1) in wenigstens ein weiteres Werkzeugformteil mit unterschiedlicher Kavität
für wenigstens einen weiteren eingespritzten Kunststoff freigebbar ist.

14. Kunststoffbauteil (9) hergestellt nach einem Verfahren nach den Patentansprüchen 1 bis 5 aufweisend eine Folie (2) nach wenigstens einen der Patentansprüche 6 bis 11 mit einer Folienoberseite (2-1) und einer Folienunterseite (2-2), **dadurch gekennzeichnet, dass** das Kunststoffbauteil (9) aus wenigstens zwei Kunststoffen besteht, wobei der erste Kunststoff eine Mischung aus Acrylnitril-Butadien-Styrol und Polyamid (ABS-PA), eine Mischung aus Polycarbonat und Acrylnitril-Butadien-Styrol (PC-ABS) oder reines Polycarbonat (PC) und der zweite Kunststoff Polyurethan (PUR), Polyurea, Polycarbonat (PC) oder Polymethylmethacrylat (PMMA) ist, und die Folie (2) auf der Folienunterseite (2-2) mit dem ersten Kunststoff hinterspritzt ist, wobei durch die Dicke der Kaschierung (3-1, 3-2) und/oder die Vertiefungen (5) oder Erhebungen des ersten Werkzeugformteils (1-1) eine Verformung der Folie (2) und damit eine Oberflächenstruktur auf dem Kunststoffteil (9) erzeugt ist, und auf der Folienoberseite (2-1) ein zweiter Kunststoff gespritzt ist, welcher transparent ausgebildet ist.

## Claims

1. Method of manufacturing a plastic component (9) using a foil (2) which comprises at least one region with lamination (3-1, 3-2, 3-3) and at least one region without lamination (4-1, 4-2, 4-3) on the upper side (2-1) of the foil, and an injection moulding tool (1) consisting of at least two moulding tool parts (1-1, 1-2), wherein the first moulding tool part (1-1) comprises a positive or negative structure in the form of one or more elevations or depressions (5) which is congruent in the opposite direction to the at least one region with lamination (3-1, 3-2) and to the at least one region without lamination (4-1) on the upper side (2-1) of the foil, with the following steps:
lit. a. inserting and placing the foil into the injection moulding tool (1),
lit. b. fixing the foil (2) in the injection moulding tool (1) by or when closing the two moulding tool parts (1-1, 1-2),
lit. c. injecting a first plastic material into the second moulding tool part (1-2), whereby
lit. d. the foil (2) is pressed against the first moulding tool part (1-1) by the first plastic material injected into a cavity of the second moulding tool part (1-2) and the foil (2) is positively brought into the one or more depressions (5) or around the one or more elevations of the first moulding tool part (1-1) by the pressure of the plastic material injected into the cavity of the second moulding tool part (1-2) so that a 3D effect is created,
lit. e. injection of at least one plastic layer onto the upper side (2-1) of the foil by using at least one further, differently shaped cavity in the injection moulding tool (1),
lit. f. removing the plastic component (9) from the injection moulding tool (1).

2. Method according to claim 1, **characterised in that** the foil (2) comprises regions with lamination (3-1, 3-2, 3-3) and regions without lamination (4-1, 4-2, 4-3) on the upper side (2-1) and the underside (2-2) of the foil, wherein the at least one region with lamination (3-1, 3-2) on the upper side (2-1) of the foil and the at least one region with lamination (3-3) on the underside (2-2) of the foil overlap at least partially, and wherein the at least one region without lamination (4-1) on the upper side (2-1) of the foil and the at least one region without lamination (4-2, 4-3) on the underside (2-2) of the foil do not overlap at least partially.

3. Method according to claim 1, **characterised in that** by using at least three differently shaped cavities in the injection moulding tool (1) between step lit. d. and lit. f. at least two further plastic layers are injected onto the upper side (2-1) of the foil with the shape of the corresponding cavity.

4. Method according to claim 3, **characterised in that** at least one lenticular moulding is formed on the upper side (2-1) of the foil with the injection by the first cavity of the first moulding tool part (1-1).

5. Method according to claim 3 or 4, **characterised in that** by using transparent plastic materials with different refractive indices, an optical effect is created by light refraction at the interfaces.

6. Foil (2) for use in a method according to claims 1 to 5, wherein the foil (2) comprises regions with lamination (3-1, 3-2, 3-3) and regions without lamination (4-1, 4-2) on the upper side (2-1) of the foil and on the underside (2-2) of the foil, wherein the at least one region with lamination (3-1, 3-2) on the upper side (2-1) of the foil and the at least one region with lamination (3-3) on the underside (2-2) of the foil overlap at least partially, and the at least one region without lamination (4-1) on the upper side (2-1) of the foil and the at least one region without lamination (4-2, 4-3) on the underside (2-2) of the foil do not overlap at least partially.

7. Foil (2) according to claim 6, **characterised in that** the foil (2) is transparent or at least translucent.

8. Foil (2) according to claim 6, **characterised in that** the foil (2) consists of polyvinylidene fluoride (PVDF).

9. Foil (2) according to claim 6, **characterised in that** the foil (2) has a thickness of at least 10 µm.

10. Foil (2) according to claim 6, **characterised in that** the foil (2) is coated with metal by means of physical vapour deposition (PVD).

11. Foil (2) according to claim 6, **characterised in that** the foil (2) comprises additional pigments.

12. Injection moulding tool (1) for use in a method according to the claims 1 to 5 and with a foil (2) according to the claims 6 to 11 for manufacturing a plastic component (9), wherein the injection moulding tool (1) comprises at least two moulding tool parts (1-1, 1-2), wherein the first moulding tool part (1-1) comprises a positive or negative structure in the form of one or more elevations or depressions (5) which is congruent in the opposite direction to the at least one region with lamination (3-1, 3-2) and to the at least one region without lamination (4-1) on the upper side (2-1) of the foil in which the foil (2) can be positively brought into the one or more depressions (5) or around the one or more elevations of the first moulding tool part (1-1) by the pressure of the plastic material injected into the cavity of the second moulding tool part (1-2) so that a 3D effect can be created.

13. Injection moulding tool (1) according to claim 12, **characterised in that**, in addition to the first moulding tool part (1-1), at least one further cavity can be released for at least one further injected plastic by
lit. a. Opening and closing of slides on the first moulding tool part (1-1) or
lit. b. Turning of an index plate on which the first (1-1) and at least one further moulding tool part with different cavities are arranged, or
lit. c. Transferring the plastic component (9) from the first moulding tool part (1-1) into at least one further moulding tool part with different cavity.

14. Plastic component (9) manufactured by a method according to claims 1 to 5, comprising a foil (2) according to at least one of claims 6 to 11 with an upper side (2-1) of the foil and an underside (2-2) of the foil, **characterised in that** the plastic component (9) consists of at least two plastic materials, the first plastic material is a mixture of acrylonitrile butadiene styrene and polyamide (ABS-PA), a mixture of polycarbonate and acrylonitrile butadiene styrene (PC-ABS) or pure polycarbonate (PC) and the second plastic is polyurethane (PUR), polyurea, polycarbonate (PC) or poly(methyl methacrylate) (PMMA), and
and the foil (2) is back-injected with the first plastic material on the underside (2-2) of the foil, wherein a deformation of the foil (2) and thus a surface structure is created on the plastic component (9) by the thickness of the lamination (3-1, 3-2) and/or the depressions (5) or elevations of the first moulding tool part (1-1), and a second plastic material is injected on the upper side (2-1) of the foil, which is transparent.

## Revendications

1. Procédé pour fabriquer une pièce en matière plastique (9) au moyen d'un film (2),
qui présente sur la face supérieure de film (2-1) au moins une zone avec contrecollage (3-1, 3-2, 3-3) et au moins une zone sans contrecollage (4-1, 4-2, 4-3),
et un moule de moulage par injection (1), constitué d'au moins deux parties de moule (1-1, 1-2), dans lequel la première partie de moule (1-1) présente une structure positive ou négative congruente de manière opposée sur la face supérieure de film (2-1) par rapport à la au moins une zone avec contrecollage (3-1, 3-2) et à la au moins une zone sans contrecollage (4-1) sous forme d'un ou de plusieurs élévations ou creux (5)
avec les étapes suivantes :
let. a. Introduction et placement du film (2) dans le moule de moulage par injection (1),
let. b. Fixation du film (2) dans le moule de moulage par injection (1) par ou lors de la fermeture des deux parties de moule (1-1, 1-2),
let. c. Injection d'une première matière plastique dans la deuxième partie de moule (1-2), moyennant quoi
let. d. le film (2) est pressé par la première matière plastique injectée dans une cavité de la deuxième partie de moule (1-2) contre la première partie de moule (1-1) et le film (2) est amené par coopération de formes dans les un ou plusieurs creux (5) ou autour des une ou plusieurs élévations de la première partie de moule (1-1) par la pression de la matière plastique injectée dans la cavité de la deuxième partie de moule (1-2), de sorte qu'un effet 3D est produit,
let. e. Projection d'au moins une couche de matière plastique sur la face supérieure de film (2-1) par utilisation d'au moins une autre cavité faisant saillie de façon différente dans le moule de moulage par injection (1),
let. f. Prélèvement de la pièce en matière plastique (9) du moule de moulage par injection (1).

2. Procédé selon la revendication 1, **caractérisé en ce que** le film (2) présente sur la face supérieure de film (2-1) et sur la face inférieure de film (2-2) des zones avec contrecollage (3-1, 3-2, 3-3) et des zones sans contrecollage (4-1, 4-2), dans lequel la au moins une zone avec contrecollage (3-1, 3-2) sur la face supérieure de film (2-1) et la au moins une zone avec contrecollage (3-3) sur la face inférieure de film (2-2) se recouvrent au moins partiellement, et la au moins une zone sans contrecollage (4-1) sur la face supérieure de film (2-1) et la au moins une zone sans contrecollage (4-2, 4-3) sur la face inférieure de film (2-2) ne se recouvrent pas au moins partiellement.

3. Procédé selon la revendication 1, **caractérisé en ce que** par utilisation d'au moins trois cavités faisant saillie de façon différente dans le moule de moulage par injection (1) entre l'étape let. d. et let. f., au moins deux autres couches de matière plastique sont projetées sur la face supérieure de film (2-1) avec la forme de la cavité correspondante.

4. Procédé selon la revendication 3, **caractérisé en ce que**, avec la projection par la première cavité de la première partie de moule (1-1), au moins une partie saillante en forme de lentille est réalisée sur la face supérieure de film (2-1).

5. Procédé selon la revendication 3 ou 4, **caractérisé en ce que** par l'utilisation de matières plastiques transparentes avec des indices de réfraction différents, un effet optique est produit par réfraction sur les surfaces limites.

6. Film (2) destiné à être utilisé dans un procédé selon les revendications 1 à 5, dans lequel le film (2) présente sur la face supérieure de film (2-1) et sur la face inférieure de film (2-2) des zones avec contrecollage (3-1, 3-2, 3-3) et des zones sans contrecollage (4-1, 4-2), dans lequel la au moins une zone avec contrecollage (3-1, 3-2) sur la face supérieure de film (2-1) et la au moins une zone avec contrecollage (3-3) sur la face inférieure de film (2-2) se recouvrent au moins partiellement, et la au moins une zone sans contrecollage (4-1) sur la face supérieure de film (2-1) et la au moins une zone sans contrecollage (4-2, 4-3) sur la face inférieure de film (2-2) ne se recouvrent pas au moins partiellement.

7. Film (2) selon la revendication 6, **caractérisé en ce que** le film (2) est réalisé de manière transparente ou au moins translucide.

8. Film (2) selon la revendication 6, **caractérisé en ce que** le film (2) est constitué de polyfluorure de vinylidène (PVDF).

9. Film (2) selon la revendication 6, **caractérisé en ce que** le film (2) présente une épaisseur d'au moins 10 µm.

10. Film (2) selon la revendication 6, **caractérisé en ce que** le film (2) est revêtu de métal au moyen d'un dépôt physique en phase vapeur (PVD).

11. Film (2) selon la revendication 6, **caractérisé en ce que** le film (2) présente des pigments additionnels.

12. Moule de moulage par injection (1) destiné à être utilisé dans un procédé selon les revendications 1 à 5 et avec un film (2) selon les revendications 6 à 11 pour la fabrication d'une pièce en matière plastique (9), dans lequel le moule de moulage par injection (1) présente au moins deux parties de moule (1-1, 1-2), dans lequel la première partie de moule (1-1) présente une structure positive ou négative congruente de manière opposée sur la face supérieure de film (2-1) par rapport à la au moins une zone avec contrecollage (3-1, 3-2) et à la au moins une zone sans contrecollage (4-1) sous forme d'un ou de plusieurs élévations ou creux (5), dans laquelle le film (2) peut être amené par coopération de formes dans les un ou plusieurs creux (5) ou autour des une ou plusieurs élévations de la première partie de moule (1-1) par la pression de la matière plastique injectée dans la cavité de la deuxième partie de moule (1-2), de sorte qu'un effet 3D peut être produit.

13. Moule de moulage par injection (1) selon la revendication 12, **caractérisé en ce que**, en plus de la première cavité de la première partie de moule (1-1), au moins une autre cavité peut être libérée par
Let. a. Ouverture et fermeture de tiroirs sur la première partie de moule (1-1) ou
Let. b. Rotation d'un plateau d'indexation, sur lequel la première (1-1) et au moins une autre partie de moule avec des cavités différentes est disposée, ou
Let. c. Déplacement de la pièce en matière plastique (9) à partir de la première partie de moule (1-1) dans au moins une autre partie de moule avec une cavité différente
pour au moins une autre matière plastique injectée.

14. Pièce en matière plastique (9) fabriquée selon un procédé selon les revendications 1 à 5 présentant un film (2) selon au moins l'une des revendications 6 à 11 avec une face supérieure de film (2-1) et une face inférieure de film (2-2),
**caractérisée en ce que** la pièce en matière plastique (9) est constituée d'au moins deux matières plastiques, dans laquelle la première matière plastique est un mélange d'acrylonitrile-butadiène-styrène et de polyamide (ABS-PA), un mélange de polycarbonate et d'acrylonitrile-butadiène-styrène (PC-ABS) ou de polycarbonate (PC) pur et la deuxième matière plastique du polyuréthane (PUR), de la polyurée, du polycarbonate (PC) ou du polyméthacrylate de méthyle (PMMA), et le film (2) est surmoulé par injection sur la face inférieure de film (2-2) avec la première matière plastique, dans laquelle une déformation du film (2) et ainsi une structure superficielle est produite sur la pièce en matière plastique (9) du fait de l'épaisseur du contrecollage (3-1, 3-2) et/ou des creux (5) ou élévations de la première partie de moule (1-1), et une deuxième matière plastique, laquelle est réalisée de manière transparente, est injectée sur la face supérieure de film (2-1).
